# EUROPÄISCHE PATENTANMELDUNG

(11) **EP 2 192 392 A2**
(43) Veröffentlichungstag der Anmeldung: **02.06.2010**
(21) Anmeldenummer: 10156839.2
(22) Anmeldetag: 13.02.2007
(51) Int. Cl.: G01F 11/00, G01F 13/00, G01F 15/18, G01G 13/02, B65B 37/10

(54) **Dosiervorrichtung mit einer Aufnahmevorrichtung für eine einsetzbare Einheit**

(30) Priorität: 13.02.2007 EP 07102298
(62) Teilanmeldung aus: 07102298.2
(71) Anmelder: Mettler-Toledo AG, 8606 Greifensee (CH)
(72) Erfinder: Lüchinger, Paul, 8610, Uster (CH); Zehnder, Marc, 8604, Volketswil (CH)

(57) **Zusammenfassung**

Die Erfindung betrifft eine einsetzbare Einheit die in eine Aufnahmevorrichtung einer Dosiervorrichtung einsetzbar beziehungsweise aus dieser Aufnahmevorrichtung entfernbar ist, wobei sie eine Dosiereinheit für pulver- oder pastenförmiges Dosiergut, eine Titratoreinheit, eine Pumpeinheit, eine Einheit mit Rohrleitungen und Armaturen, eine Behältereinheit, eine Sensoreinheit , eine Heiz- und/oder Kühleinheit oder ein Adapter zur Aufnahme einer dieser Einheiten oder weiterer Einheiten ist. Die einsetzbare Einheit weist mindestens zwei Gegenflächen auf, wobei die Gegenflächen bei in die Aufnahmevorrichtung eingesetzter Einheit mit den Führungsflächen mindestens zweier Träger der Aufnahmevorrichtung in Anlage sind und dass mindestens eine Gegenfläche der einsetzbaren Einheit und die im Betriebszustand mit dieser Gegenfläche in Anlage stehende Führungsfläche elektrisch leitende Kontakte zur Übertragung von Signalen und/oder elektrischer Energie aufweisen.

## Beschreibung

Die vorliegende Erfindung bezieht sich auf eine Dosiervorrichtung mit einer Aufnahmevorrichtung für eine einsetzbare Einheit und eine einsetzbare Einheit.

Dosiervorrichtungen für pulver- oder pastenförmiges Dosiergut finden insbesondere beim Dosieren kleiner Mengen mit hoher Präzision in kleine Zielgefässe Verwendung. Häufig sind solche Zielgefässe auf einer Waage platziert, um die Menge des aus der Dosiervorrichtung ausgetragenen Dosierguts zu verwiegen, so dass es anschliessend bestimmungsgemäss weiter verarbeitet werden kann.

Das zu dosierende Dosiergut befindet sich beispielsweise in einer Dosiereinheit, welche ein Entnahmegefäss und einen Dosierkopf aufweist. Dabei ist es wünschenswert, das zu dosierende Dosiergut durch eine kleine Öffnung der Dosiereinheit auszutragen, so dass sie auch gezielt in ein Gefäss mit einem kleinen Öffnungsquerschnitt abgefüllt werden kann.

Dosiervorrichtungen für trockenes und/oder pulverförmiges Dosiergut, beispielsweise Farbstoffpulver sind bekannt und im Einsatz. So wird in der US 5 145 009 A eine Vorrichtung zum Dosieren beschrieben, die aus einer Haltevorrichtung mit einer Aufnahmevorrichtung und einer Dosiereinheit besteht. An der Unterseite der Dosiereinheit ist eine Austragungsöffnung angeordnet, welche durch das lineare Verschieben eines Verschlusselements geöffnet und verschlossen werden kann. Als Verschlusselement dient ein kegelförmiger, sich nach oben verjüngender zum Öffnen der Austragungsöffnung vertikal nach unten verstellbarer Ventilkörper, der in seiner Offenstellung rotiert und Mittel zum Fördern des Gutes in Richtung der Austragungsöffnung besitzt. Ferner wird die Dosiereinheit von einer Antriebswelle durchdrungen, welche an der Oberseite der Dosiereinheit über diese hinausragt und mit einem Antrieb gekoppelt ist. Die Dosiereinheit ist an ihrer Unterseite mit der Dosiervorrichtung verbunden. Auf den Deckel der Dosiereinheit wirken mehrere Druckzylinder, über deren Hub die Auslassöffnung und damit die Fördermenge aus der Dosiereinheit beeinflusst werden kann. Der Ventilkörper muss bei solchen Dosiervorrichtungen möglichst spielfrei in der Dosiereinheit gelagert sein, damit eine genaue Dosierung des Dosiergutes möglich ist. Ferner erfordert eine Dosierung im Mikrogrammbereich sehr starre Verbindungen zwischen dem Antrieb und der eingesetzten Dosiereinheit, da in der Endphase des Dosiervorganges die Rest-Dosiermenge über kleinste Veränderungen des Drehwinkels und des linearen Hubs des Ventilkörpers dosiert wird.

Die Dosiereinheit wird in eine ringförmige Vertiefung der Aufnahmevorrichtung eingesetzt und damit bezüglich der Antriebswelle und den Druckzylindern positioniert. Die Auflagefläche der Dosiereinheit ist auf derselben Ebene wie die Austragungsöffnung angeordnet Durch den Druck der Druckzylinder auf den Deckel der Dosiereinheit wird die Dosiereinheit in der Aufnahmevorrichtung gefangen. Um eine möglichst gute Abstützung bezüglich der Druckkraft zu erhalten, ist eine grosse Abstützfläche notwendig. Der grosse Durchmesser der Abstützfläche und die ringförmige Umfassung der Dosiereinheit aufgrund der ringförmigen Vertiefung bieten zwar gewähr, dass infolge asymmetrischer Druckkräfte auf den Deckel die Dosiereinheit nicht aus der Aufnahmevorrichtung kippen kann. Jedoch können der grosse Durchmesser der Abstützfläche und die ringförmige Umfassung eine kompakte Ausgestaltung der Aufnahmevorrichtung beziehungsweise der Dosiervorrichtung erschweren. Diese Aufnahmevorrichtung für Dosiereinheiten weist zudem den Nachteil auf, dass sich Dosiergut in der ringförmigen Vertiefung zwischen der Auflagefläche und der Aufnahmefläche der Aufnahmevorrichtung ansammeln kann. Eine einseitige, lokale Ansammlung von Dosiergut zwischen der Aufnahmefläche und Auflagefläche kann zu Winkelfehlern der Dosiereinheit bezogen auf die Aufnahmevorrichtung führen und gegebenenfalls den Dosierbetrieb oder das Auswechseln der Dosiereinheit aufgrund von Verspannungen beeinträchtigen.

Angesichts der Probleme der oben beschriebenen Aufnahmevorrichtung einer Dosiervorrichtung liegt der vorliegenden Erfindung daher die Aufgabe zugrunde, eine Dosiervorrichtung mit einer Aufnahmevorrichtung zu schaffen, welche eine einfache und rasche Auswechselbarkeit einer beliebigen einsetzbaren Einheit ermöglicht, kompakt ausgestaltet ist und gegen Verschmutzungen unempfindlich ist.

Diese Aufgabe wird mit einer Dosiervorrichtung mit einer Aufnahmevorrichtung, einer einsetzbaren Einheit und einer Dosiereinheit gelöst, welche die in den unabhängigen Patentansprüchen angegebenen Merkmale aufweisen.

Eine Aufnahmevorrichtung in einer Dosiervorrichtung zur Aufnahme einer beliebigen, in die Aufnahmevorrichtung einsetzbaren Einheit, beinhaltet mehrere zueinander parallel angeordnete, im Wesentlichen in ihrer Längsrichtung orthogonal zur Schwerkraftrichtung sich erstreckende Träger. Mindestens zwei dieser Träger sind bezogen auf die Schwerkraftrichtung in übereinander liegenden Ebenen angeordnet. Mindestens zwei Träger weisen je mindestens eine Auflagestelle auf, durch welche Auflagestellen im Betriebszustand der Dosiervorrichtung die einsetzbare Einheit über an der einsetzbaren Einheit ausgebildete Abstützstellen gegen die Schwerkraft abgestützt werden kann. Jeder Träger weist mindestens je einen, der Positionierung der einsetzbaren Einheit in einer Ebene orthogonal zur Schwerkraft dienenden Vorsprung auf. Die den Vorsprung bildende Ausdehnung erstreckt sich im Wesentlichen gegen die Schwerkraftrichtung. Die Vorsprünge ragen bei eingesetzter Einheit in an der einsetzbaren Einheit ausgebildete Ausnehmungen. Durch die Vorsprünge und die Auflagestellen wird im Zusammenwirken mit den Ausnehmungen und den Abstützstellen im Wesentlichen eine formschlüssige Verbindung zwischen der Aufnahmevorrichtung und der einsetzbaren Einheit gebildet.

Eine Dosiervorrichtung weist vorzugsweise eine Haltevorrichtung auf, an welcher die Aufnahmevorrichtung derart angeordnet ist, dass bei eingesetzter einsetzbarer Einheit genügend Freiraum unterhalb der einsetzbaren Einheit vorhanden ist, um in diesem Freiraum ein Zielgefäss anzuordnen, in welches beispielsweise Dosiergut eindosiert werden soll. Ferner kann an der Haltevorrichtung eine Antriebsvorrichtung angeordnet sein, welche über eine mechanische Verbindung, beispielsweise eine Antriebswelle, auf mechanisch bewegbare Komponenten der einsetzbaren Einheit einwirken kann. Sofern die einsetzbare Einheit eine Dosiereinheit ist, können die bewegbaren mechanischen Komponenten eine Verschlusswelle und ein Verschlusskörper sein, durch welchen eine, bezogen auf den Betriebszustand an der Unterseite ausgebildete Austragungsöffnung verschliessbar ist.

Mit Betriebszustand der Dosiervorrichtung ist der betriebsbereite Zustand gemeint.
Das heisst, dass zumindest eine einsetzbare Einheit in der Aufnahmevorrichtung eingesetzt ist. Die Dosiereinheit muss aber noch nicht mit einer Antriebsvorrichtung der Dosiervorrichtung gekoppelt sein. Der Kopplungsvorgang kann beispielsweise Teil des Dosiervorganges sein. Üblicherweise wird das aus der Dosiereinheit ausgetragene Dosiergut in ein Zielgefäss eindosiert, welches auf dem Lastaufnehmer einer Kraftmessvorrichtung, insbesondere einer Waage angeordnet ist. Die Kraftmessvorrichtung dient nicht nur der Erfassung und Anzeige, wie viel Dosiergut in das Zielgefäss eindosiert wurde. Der während des Dosiervorganges kontinuierlich erfasste Wägewert der Kraftmessvorrichtung kann an eine Steuer- und Regelvorrichtung weitergeleitet werden, welche den Wägewert mit einem vom Benutzer festgelegten Zielwert vergleicht und entsprechend über die Antriebsvorrichtung die Austrittsöffnung der Dosiereinheit öffnet oder schliesst.

Die Aufteilung in mehrere Auflagestellen verhindert, dass eine einzige, grossflächige Auflagestelle vorhanden ist, auf welcher sich beispielsweise pulverförmiges Dosiergut ansammeln kann. Die gesamte Auflagefläche kann zudem auf eine, die Flächenpressung betreffende, notwendige Ausdehnung reduziert werden, da auf die einsetzbare Einheit einwirkende Drehmomente, beispielsweise durch die Lagerreibung einer in der einsetzbaren Einheit drehbar gelagerten Verschlusswelle verursacht, und an der einsetzbaren Einheit angreifende Kippmomente nicht durch eine grosse Auflagefläche, sondern über die Vorsprünge abgestützt werden.

Durch die Anordnung von mindestens zwei Trägern in übereinander liegenden Ebenen kann zudem die Aufnahmevorrichtung sehr kompakt ausgestaltet werden.

Die Vorsprünge können eine beliebige, vorzugsweise einfach herzustellende Form wie beispielsweise eine zylindrische, eine kubische, eine kegel- oder kegelstumpfförmige oder eine halbkugelförmige Grundform und dergleichen aufweisen. Dadurch, dass die Vorsprünge sich ausgehend vom jeweiligen Träger gegen die Schwerkraftrichtung hin erstrecken, wird eine Einsetzrichtung in Richtung der Schwerkraft beziehungsweise eine Entfernungsrichtung gegen die Richtung der Schwerkraft definiert.

Die Auflagestellen und die Vorsprünge müssen nicht zwingend getrennte Elemente sein. Die Vorsprünge können gleichzeitig auch als Auflagestellen dienen. Zudem können die Vorsprünge derart ausgebildet, beispielsweise konisch sein, dass jegliches Spiel zwischen der Aufnahmevorrichtung und der einsetzbaren Einheit aufgehoben werden kann.

Vorzugsweise weist diese Aufnahmevorrichtung vier Träger auf, wobei jeder der Träger je einen Vorsprung aufweist. Jeweils zwei der Träger sind in derselben Ebene angeordnet, so dass die einsetzbare Einheit im Betriebszustand im Wesentlichen zwischen den jeweils zwei Trägern einer Ebene angeordnet ist. Die einsetzbare Einheit ist dadurch zwischen den Trägern gefangen, was eine zusätzliche Sicherheit gegen das Herausfallen einer Dosiereinheit aus der Aufnahmevorrichtung infolge von Vibrationen bietet.

Idealerweise ist bei einer einsetzbaren Einheit, welche mindestens eine Austragungsöffnung aufweist, die Austragungsöffnung im Betriebszustand unterhalb der Träger, beziehungsweise unterhalb der Abstützstellen angeordnet. Dadurch kann dem weiter oben beschriebenen Problem der Verschmutzung der Auflagestellen beziehungsweise der Abstützstellen weitgehend abgeholfen werden.

Um die Vorsprünge mechanisch zu entlasten, können auf die einsetzbare Einheit einwirkende Drehmomente auch über geeignete, an der Dosiereinheit ausgebildete Gegenflächen abgestützt werden. Zum Zwecke der Abstützung von Drehmomenten kann daher die Aufnahmevorrichtung, vorzugsweise jeder Träger mindestens eine Führungsflanke aufweisen, welche im Betriebszustand der Dosiervorrichtung mit den Gegenflächen in Anlage sind.

Um eine einfache und kostengünstige Herstellung der Aufnahmevorrichtung zu erreichen, kann jeder Träger als Blechteil ausgeführt sein und die Stärke der Träger und der Vorsprünge der Blechdicke entsprechen. Selbstverständlich können die Träger auch aus Kunststoff gefertigt sein.

Wie weiter oben beschrieben, wird die Einsetzrichtung beziehungsweise Entfernungsrichtung der einsetzbaren Einheit durch die Ausgestaltung und Ausrichtung der Vorsprünge definiert. Idealerweise ist die Antriebsvorrichtung als Teil der Dosiervorrichtung oberhalb der Aufnahmevorrichtung und damit auch oberhalb der eingesetzten, einsetzbaren Einheit angeordnet. Durch die Kopplung der Antriebseinheit mit der einsetzbaren Einheit kann beispielsweise verhindert werden, dass die einsetzbare Einheit in der Entfernungsrichtung bewegt werden kann.

Aus konstruktiven Gründen kann es sein, dass eine Bewegung der einsetzbaren Einheit in Entfernungsrichtung durch die Kopplung nicht verhindert werden kann oder die einsetzbare Einheit beim Entkopplungsvorgang, beispielsweise durch klemmen der Kupplung, in Entfernungsrichtung aus der Aufnahmevorrichtung herausgezogen wird. Vorzugsweise ist deshalb an der Dosiervorrichtung ein Verriegelungselement vorgesehen, welches eine Bewegung der einsetzbaren Einheit gegen die Schwerkraftrichtung verhindert.

Auch wenn primär von einer Dosiervorrichtung ausgegangen wird, muss die Einsetzbare Einheit nicht zwingend eine Dosiereinheit sein. Beispielsweise kann sie eine Dosiereinheit für pulver- oder pastenförmiges Dosiergut, eine Titratoreinheit, eine Pumpeinheit, eine Einheit mit Rohrleitungen und Armaturen, eine Behältereinheit, eine Sensoreinheit oder ein Adapter zur Aufnahme einer dieser Einheiten oder weiterer Einheiten sein. Als weitere Einheiten können beispielsweise auch Rührwerke, Mahlwerke oder Heiz- und/oder Kühleinheiten als einsetzbare Einheiten in die Aufnahmevorrichtung eingesetzt werden. Dadurch dass aus einer ganzen Palette verschiedener einsetzbarer Einheiten ausgewählt werden kann, ist die Dosiervorrichtung nicht nur zum dosieren von pulver- oder pastenförmigem Dosiergut verwendbar, sondern kann zur Weiterbehandlung des Dosiergutes in eine Art Minilabor mit über die Kraftmessvorrichtung kontinuierlich erfassbaren Gewichtswerten verwandelt werden.

Die weiter oben beschriebenen Führungsflächen der Aufnahmevorrichtung können im Zusammenwirken mit den Gegenflächen der einsetzbaren Einheit nicht nur der Abstützung von Drehmomenten, sondern auch als Einsetzhilfen dienen. Zu diesem Zwecke weist die einsetzbare Einheit vorzugsweise mindestens zwei Gegenflächen auf, wobei die Gegenflächen bei eingesetzter Einheit mit den Führungsflächen mindestens zweier Träger in Anlage sind. Eine besonders benutzerfreundliche Ausgestaltung ist dann gegeben, wenn die Träger und/oder die Gegenflächen Einführungshilfsflächen und/oder Einführungsflanken, beispielsweise gerundete oder abgeschrägte Kanten aufweisen. Sofern der Abstand der Gegenflächen leicht grösser ist als der Abstand der Führungsflächen, führt dies beim Einsetzen zu einer elastischen Aufspreizung der Träger. Dadurch wird die einsetzbare Einheit absolut spielfrei in der Aufnahmevorrichtung gehalten.

Sofern Signale und/oder elektrischer Energie von der Dosiervorrichtung zur einsetzbaren Einheit beziehungsweise von der einsetzbaren Einheit an die Dosiervorrichtung übertragen werden müssen, kann mindestens eine Gegenfläche der einsetzbaren Einheit und die im Betriebszustand mit dieser Gegenfläche in Anlage stehende Führungsfläche elektrisch leitende Kontakte aufweisen.

Solche Führungsflächen sind besonders dann von Vorteil, wenn die einsetzbare Einheit durch den Benutzer von Hand in die Aufnahmevorrichtung eingesetzt wird. Dieser Vorgang kann aber auch mittels einer Beschickungsvorrichtung für einsetzbare Einheiten automatisiert werden. Damit die Beschickungsvorrichtung die einsetzbare Einheit sicher in die Aufnahmevorrichtung einsetzen beziehungsweise daraus entfernen kann, ist an der einsetzbaren Einheit mindestens eine Halterung ausgebildet oder mit der einsetzbaren Einheit mindestens eine Halterung verbunden. Die Beschickungsvorrichtung weist mindestens eine in ihrer Ausgestaltung mit der Halterung formschlüssig korrespondierende Beschickungsaufnahme auf. Diese Beschickungsaufnahme kann eine, der form- oder kraftschlüssigen Verbindung der Beschickungsvorrichtung mit der Halterung dienende Verriegelungseinrichtung aufweisen, wobei durch die Verriegelungseinrichtung während eines Beschickungsvorganges beziehungsweise während eines Entfernungsvorganges die mindestens eine, einsetzbare Einheit in der Beschickungsaufnahme arretierbar ist.

Wie bereits ausführlich beschrieben, weist die Dosiervorrichtung eine Antriebsvorrichtung auf. Da die Antriebsvorrichtung gegebenenfalls mit der einsetzbaren Einheit gekoppelt werden muss, ist die Anordnung mindestens einer Aufnahmevorrichtung an der Antriebsvorrichtung sehr vorteilhaft, da durch diese direkte Verbindung die Anwendung von Form- und Lagetoleranzen gering gehalten werden können.

Einzelheiten der erfindungsgemässen Dosiervorrichtung ergeben sich anhand der Beschreibung der in den Zeichnungen dargestellten Ausführungsbeispiele. Es zeigen:
- Fig. 1: eine schematische, dreidimensionale Darstellung einer Dosiervorrichtung mit einer Haltevorrichtung, einer mit der Haltevorrichtung verbundenen Aufnahmevorrichtung mit vier Trägern, einer Kraftmessvorrichtung und einer in die Aufnahmevorrichtung einsetzbaren Einheit;
- Fig. 2: eine schematische, dreidimensionale Darstellung der Dosiervorrichtung aus der Figur 1 und eine schematisch dargestellte Beschickungsvorrichtung, wobei eine einsetzbare Einheit in einer ersten Ausführung, welche eine Dosiereinheit für pulver- oder pastenförmiges Dosiergut ist, in die Aufnahmevorrichtung eingesetzt ist und eine drehantreibbare Verschlusswelle der Dosiereinheit mit einer Antriebswelle der Antriebsvorrichtung gekoppelt ist;
- Fig. 3: eine dreidimensionale Darstellung einer einsetzbaren Einheit in einer zweiten Ausführung mit einem, eine Flüssigkeit enthaltenden Behälter;
- Fig. 4: eine dreidimensionale Darstellung einer einsetzbaren Einheit in einer dritten Ausführung als Adapter, welcher Adapter mit einer Dosiereinheit verbindbar ist;
- Fig. 5: eine dreidimensionale Darstellung einer einsetzbaren Einheit in einer vierten Ausführung mit einem Messfühler und mit einem Kabelanschluss;
- Fig. 6: eine dreidimensionale Darstellung einer einsetzbaren Einheit in einer fünften Ausführung mit einem Heizelement und mit in zwei Gegenflächen angeordneten, elektrischen Kontaktstellen;
- Fig. 7: eine dreidimensionale Darstellung einer einsetzbaren Einheit in einer sechsten Ausführung mit einem Zufuhrrohr und mit einem Schlauchanschluss;
- Fig. 8: eine dreidimensionale Darstellung einer einsetzbaren Einheit in einer siebten Ausführung mit einem Rührwerk;
- Fig. 9: eine schematische Darstellung einer Aufnahmevorrichtung in Aufsicht, wobei nur ein Teil der Aufnahmevorrichtung dargestellt ist und eine einsetzbare Einheit in die Aufnahmevorrichtung eingesetzt ist.

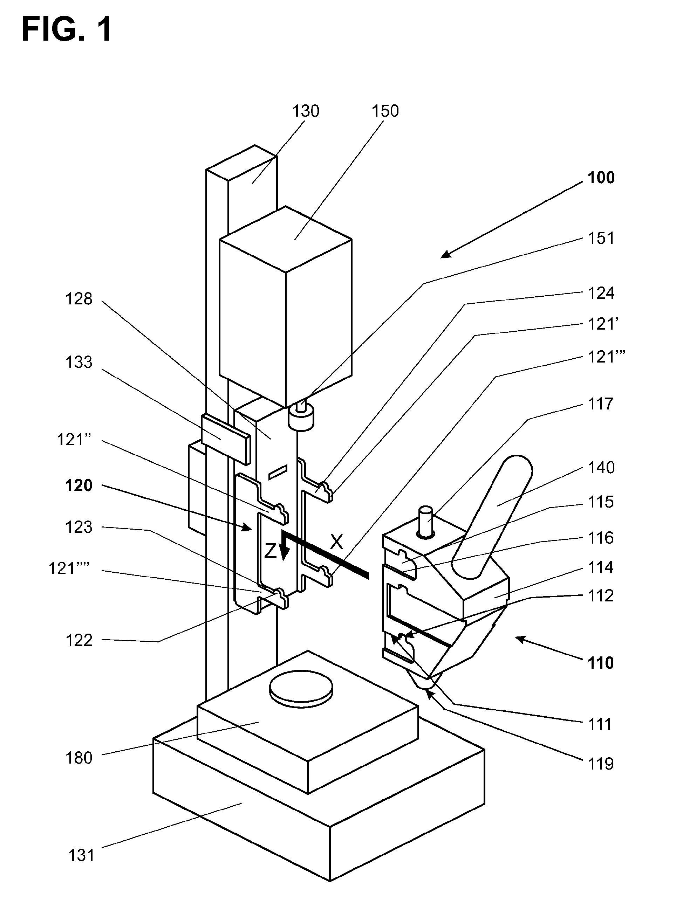

Figur 1 zeigt eine schematische, dreidimensionale Darstellung einer Dosiervorrichtung 100. Diese weist im Wesentlichen eine Haltevorrichtung 130 auf, auf deren Fuss 131 eine Kraftmessvorrichtung 180 angeordnet ist. Mit der Haltevorrichtung 130 ist eine Aufnahmevorrichtung 120 verbunden. Die Aufnahmevorrichtung 120 weist vier Träger 121', 121", 121"', 121"" auf, welche sich im Wesentlichen in ihrer Längsrichtung orthogonal zur Schwerkraftrichtung erstrecken. An jedem der Träger 121', 121", 121"', 121"" ist auf dessen Oberseite, das heisst auf der Seite, welche in entgegen gesetzter Richtung zur Schwerkraft weist, eine Auflagestelle 123 ausgebildet. Ebenfalls auf der Oberseite jedes Trägers 121', 121", 121"', 121"" ist ein entgegen der Richtung Schwerkraft sich erstreckender Vorsprung 122 ausgebildet.

Wie in Figur 1 dargestellt, ist der Vorsprung 122 im Bereich der Auflagestelle 123 angeordnet und erstreckt, beziehungsweise erhebt sich über die Auflagestelle 123, so dass die Auflagestelle 123 durch den Vorsprung 122 in zwei Bereiche geteilt wird. Dies ist aber nur eine mögliche Ausführungsform. Die Auflagestelle 123 und der Vorsprung 122 jedes Trägers 121', 121", 121"', 121"" müssen nicht zwingend nahe beieinander angeordnet sein. Auch muss nicht jeder Träger 121', 121", 121"', 121"" einen Vorsprung 122 aufweisen. Als Beispiel können ein zylindrisch ausgebildeter Vorsprung 122 und eine ringförmig ausgebildete Auflagestelle 123 auch konzentrisch zueinander angeordnet sein.

Die Träger 121', 121", 121"', 121"" sind paarweise in übereinander liegenden Ebenen und parallel zueinander angeordnet. Durch diese Ausgestaltung und Anordnung der Träger 121', 121", 121"', 121"" lässt sich eine in die Aufnahmevorrichtung 120 einsetzbare Einheit 110 aus einer definierten Einsetzrichtung Z einsetzen, welche in der Figur 1 durch den mit Z bezeichneten Pfeilschenkel dargestellt ist. Ferner weisen die beiden Träger 121', 121" und 121"' 121"" einer Ebene jeweils gegeneinander gerichtete Führungsflächen 124 auf.

Die Aufnahmevorrichtung 120 ist aus mehreren Teilen zusammengesetzt, beispielsweise sind jeweils zwei übereinanderliegend angeordnete Träger 121', 121"' und 121" 121"" als Blechstanzteil ausgeführt und an einem Zwischenstück 128 festgelegt. Dieses Zwischenstück 128 ist über Laschen 133 mit der Haltevorrichtung 130 verbunden.

Oberhalb der Aufnahmevorrichtung 120 ist eine Antriebsvorrichtung 150 angeordnet, welche über eine Antriebswelle 151 auf die mechanisch bewegbaren Teile der einsetzbaren Einheit 110 einwirken kann.

Die einsetzbare Einheit 110 weist ein Gehäuse 114 auf. An diesem Gehäuse sind der Anzahl und der Form der an der Aufnahmevorrichtung 120 vorhandenen Auflagestellen 123 entsprechende Abstützstellen 111 ausgebildet. Ferner weist das Gehäuse 114 der Anzahl und der Form der Vorsprünge 122 entsprechende Ausnehmungen 112 auf. Die Abstützstellen 111 und die Ausnehmungen 112 sind am Gehäuse 114 derart angeordnet, dass analog einer Stecker- Steckdosenverbindung ein Formschluss zwischen der Aufnahme 120 und der einsetzbaren Einheit 110 ermöglicht wird. Dieser Formschluss lässt sich nur gegen die Einsetzrichtung Z lösen.

Wie in Figur 1 dargestellt, sind die Abstützstelle 111 und die Ausnehmung 112 mittels einer am Gehäuse 114 ausgebildeten Nut geschaffen worden, deren Nutgrund die Gegenfläche 115 bildet. Die der Abstützstelle 111 gegenüberliegende Flanke 116 der Nut dient wie die Gegenfläche 115 im Zusammenwirken mit dem zugeordneten Träger 121', 121", 121"', 121"" dem Benutzer als Einsetzhilfe beim Einsetzen der einsetzbaren Einheit 110 in die Aufnahmevorrichtung 120. Durch die dadurch vorgegebene Richtung, in Figur 1 mit dem Pfeilschenkel X angegeben, können beim Einsetzen beziehungsweise dem Entfernen der einsetzbaren Einheit 110 empfindliche Teile der Dosiervorrichtung, beispielsweise im nahen Umfeld der Aufnahmevorrichtung 120 angeordnete Überwachungssensoren, geschützt werden.

Da es sich bei der einsetzbaren Einheit 110 um eine Dosiereinheit handelt, ist an der Unterseite dieser Dosiereinheit 110 eine Austragungsöffnung 119 angeordnet. Im Gehäuse 114 ist ein nicht dargestellter Verschlusskörper drehbar und entlang seiner Drehachse linear verschiebbar gelagert. Dieser Verschlusskörper, durch welchen der Öffnungsquerschnitt der Austragungsöffnung 119 variiert werden kann, kann zu diesem Zwecke über eine Verschlusswelle 117 bewegt werden. Die Verschlusswelle 117 ist bei in die Aufnahmevorrichtung 120 eingesetzter Dosiereinheit 110 über eine Kupplung mit der Antriebswelle 151 verbindbar. Ferner weist die einsetzbare Einheit 110 ein Entnahmegefäss 140 auf, welches mit dem Gehäuse 114 formschlüssig aber zum Befüllen lösbar verbunden ist. Im Gehäuse 114 ist ein hier nicht sichtbarer Zufuhrschacht vorhanden, welcher das Entnahmegefäss 140 mit der Austragungsöffnung 119 verbindet, damit das im Entnahmegefäss 140 vorhandene Dosiergut beispielsweise unter Schwerkrafteinfluss zur Austragungsöffnung gelangen kann.

Wie die Figur 1 zeigt, ist die Austragungsöffnung 119 unterhalb der Nuten und dadurch auch unterhalb der Aufnahmevorrichtung 120 angeordnet. Durch die vorgegebene Einsetzrichtung X-Z, kann die Dosiereinheit 110 nicht direkt von oben in die Aufnahmevorrichtung eingesetzt werden. Dies hat verschiedene Vorteile. Erstens werden Beschädigungen beim Einsetzvorgang der Dosiereinheit 110 in die Aufnahmevorrichtung 120, beispielsweise durch die Berührung mir Teilen der Dosiervorrichtung 100, insbesondere mit der Antriebswelle 151 verhindert. Ferner kann einer Verschmutzung der Auflagestellen 123 zusätzlich vorgebeugt werden, da die Austragungsöffnung 119 durch die vorgegebene Einsetzrichtung X-Z nie über die Auflagestellen 123 gelangen kann.

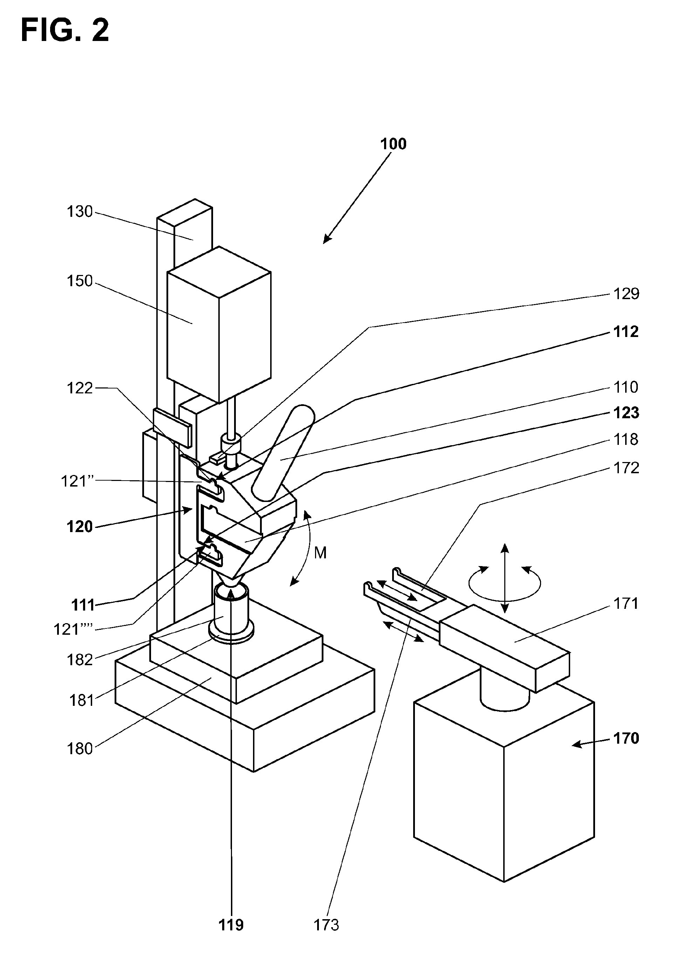

Figur 2 zeigt eine schematische, dreidimensionale Darstellung der Dosiervorrichtung 100 aus der Figur 1 mit einer in die Aufnahmevorrichtung 120 eingesetzten einsetzbaren Einheit 110. Die Beschreibung der einzelnen Elemente aus Figur 1 gilt sinngemäss auch für die Figur 2. Auf einem Lastaufnehmer 181 der Kraftmessvorrichtung 180 ist ein Zielgefäss 182 genau unterhalb der Austragungsöffnung 119 der einsetzbaren Einheit 110 positioniert.

In Figur 2 ist deutlich erkennbar, wie die Abstützstellen 111 der einsetzbaren Einheit 110 mit den Auflagestellen 123 der Aufnahmevorrichtung 120 in Anlage sind. Ferner ist auch erkennbar, wie die Vorsprünge 122 in die Ausnehmungen 112 eingreifen. Durch die Anordnung der Träger 121", 121"" in zwei Ebenen können die an der einsetzbaren Einheit wirkenden Kippmomente M wirkungsvoll über die Vorsprünge 122 abgestützt und spielfrei aufgenommen werden.

Aus konstruktiven Gründen kann es sein, dass eine Bewegung der einsetzbaren Einheit 110 in Entfernungsrichtung durch die Kopplung der einsetzbaren Einheit 110 mit der Antriebsvorrichtung 150 nicht verhindert werden kann oder die einsetzbare Einheit 110 beim Entkopplungsvorgang, beispielsweise durch Klemmen der Kupplung, in Entfernungsrichtung aus der Aufnahmevorrichtung 120 herausgezogen wird. Um dies zu verhindern, ist an der Dosiervorrichtung 100 ein linear verschiebbares Verriegelungselement 129 angeordnet, welches nach dem Einsetzen der einsetzbaren Einheit 110 in die dargestellte Verriegelungsposition gebracht wird und dadurch mit dem Gehäuse 114 form- oder kraftschlüssig in Anlage steht, um eine Bewegung der einsetzbaren Einheit 110 gegen die Schwerkraftrichtung zu verhindern. Sobald die einsetzbare Einheit 110 entfernt werden soll, wird das Verriegelungselement 129 durch lineares zurückziehen in eine Freigabeposition gebracht.

Ferner ist in der Figur 2 eine Beschickungsvorrichtung 170 schematisch dargestellt. Die Beschickungsvorrichtung 170 weist einen in der Ebene orthogonal zur Schwerkraft verschwenkbaren Beschickungsarm 171 auf. Zudem ist der Beschickungsarm 171 in Richtung der Schwerkraft und gegen die Richtung der Schwerkraft linear verschiebbar. Dessen gabelförmig ausgebildete Beschickungsaufnahme 172 kann in Richtung der Längsachse des Beschickungsarms 171 ein und ausgefahren werden. Mit Hilfe dieses Beschickungsarms 171 und dessen gabelförmiger Beschickungsaufnahme 172, die in am Gehäuse 114 ausgebildete Halterungen 118 eingreifen kann, kann eine einsetzbare Einheit 110 automatisiert in die Aufnahmevorrichtung 120 eingesetzt beziehungsweise daraus entfernt werden. Die am Gehäuse 114 ausgebildeten Halterungen 118 weisen im Wesentlichen eine nutförmige Grundform auf.

Ferner kann am Beschickungsarm 171 eine Verriegelungseinrichtung 173 vorgesehen sein, welche wie in Figur 2 in eine der nutförmigen Halterungen 118 eingreift und formschlüssig oder kraftschlüssig ein Herausfallen der einsetzbaren Einheit 110 verhindert. Selbstverständlich sind auch die in der Industrie vielfach verwendeten Industrieroboter oder so genannte Zuführ- Karussells an Stelle der dargestellten Beschickungsvorrichtung 170 einsetzbar.

In Figur 1 und Figur 2 ist eine einsetzbare Einheit 110 in einer ersten Ausführung dargestellt. Diese erste Ausführung stellt, wie weiter oben ausführlich beschrieben, eine Dosiereinheit für pulver- oder pastenförmiges Dosiergut dar. Selbstverständlich können in die Dosiervorrichtung auch andere einsetzbare Einheiten mit anderen Merkmalen eingesetzt und verwendet werden. Nachfolgend, aber nicht abschliessend, sind weitere Beispiele von einsetzbaren Einheiten beschrieben.

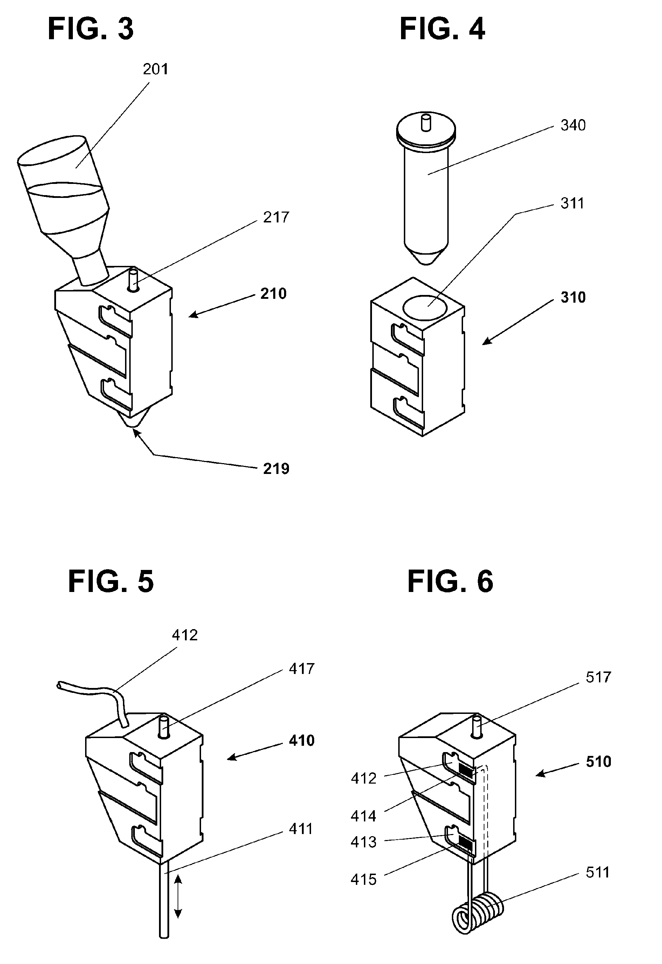

Die Figur 3 zeigt eine dreidimensionale Darstellung einer einsetzbaren Einheit 210 in einer zweiten Ausführung mit einem, eine Flüssigkeit enthaltenden Behälter 201. Das Hinzufügen von Flüssigkeit in ein Zielgefäss kann somit direkt auf der Dosiervorrichtung erfolgen, beispielsweise um ein vorangehend mit einer Dosiereinheit in das Zielgefäss eindosierte pulverförmige Dosiergut aufzulösen. Eine Verschlusswelle 217 ist mit einem nicht dargestellten Ventil verbunden, über welches Ventil die Ausflussmenge der Flüssigkeit aus einer Austragungsöffnung 219 beeinflusst werden kann.

Figur 4 zeigt eine dreidimensionale Darstellung einer einsetzbaren Einheit 310 in einer dritten Ausführung als Adapter. Mit dieser als Adapter ausgestalteten einsetzbaren Einheit 310 kann eine Vielzahl verschiedenster Funktionsmodule verbunden und diese dadurch in der Dosiereinheit eingesetzt werden. Beispielhaft ist eine Dosiereinheit 340 dargestellt, deren Funktion sich nicht von der weiter oben beschriebenen Dosiereinheit unterscheidet. Die Dosiereinheit 340 wird in Figur 4 in eine Bohrung 311 der einsetzbaren Einheit 310 gesteckt und mit nicht dargestellten Befestigungsmitteln gesichert. Selbstverständlich ist die Bohrung 311 nur eine von vielen Möglichkeiten einen Adapter mit einem Funktionsmodul zu verbinden. Grundsätzlich sind auch einzelne Elemente mit daran ausgebildeten Abstützstellen und/oder Ausnehmungen, welche an einem Funktionsmodul befestigt werden, als Adapter zu verstehen und somit Teil der vorliegenden Erfindung.

Figur 5 zeigt eine dreidimensionale Darstellung einer einsetzbaren Einheit 410 in einer vierten Ausführung mit einem Messfühler 411 und mit einem Kabelanschluss 412. Der Messfühler 411 kann über eine Welle 417 linear in Richtung der Schwerkraft beziehungsweise entgegen der Richtung der Schwerkraft verschoben werden. Der Messfühler kann ein pH-Sensor, ein Temperaturfühler und dergleichen mehr sein. Selbstverständlich müssen die vom Messfühler 411 erzeugten Messsignale nicht zwingend über den Kabelanschluss 412 beispielsweise an eine Recheneinheit übertragen werden. Sämtliche bekannten, kabellosen Übertragungsmöglichkeiten sind ebenso anwendbar.

Figur 6 zeigt eine dreidimensionale Darstellung einer einsetzbaren Einheit 510 in einer fünften Ausführung mit einem Heizelement 511. Das Heizelement 511 kann über zwei elektrische Kontaktstellen 514, 515, welche in zwei Gegenflächen 512, 513 angeordnet sind, mit elektrischer Energie versorgt werden. Es versteht sich von selbst, dass in den Trägern der Aufnahmevorrichtung ebenfalls Mittel zur Leitung elektrischen Stroms vorhanden sein müssen. Über eine Welle 517 kann beispielsweise ein nicht dargestellter elektrischer Schalter betätigt werden, welcher die Stromzufuhr zum Heizelement 511 unterbrechen kann. Selbstverständlich muss das Heizelement 511 nicht wie der Heizwendel eines Tauchsieders ausgebildet sein. Das dargestellte Heizelement 511 ist stellvertretend für eine Vielzahl unterschiedlich ausgestalteter, verwendbarer Heizelemente, aber auch für Kühlelemente anzusehen.

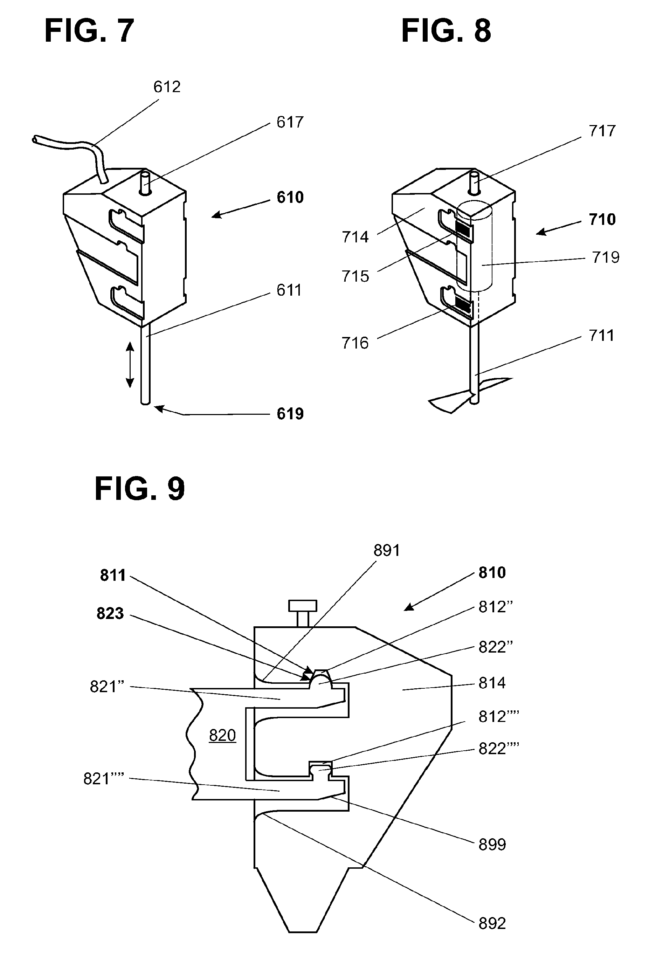

Figur 7 zeigt eine dreidimensionale Darstellung einer einsetzbaren Einheit 610 in einer sechsten Ausführung mit einem Zufuhrrohr 611 und mit einem Schlauchanschluss 612, welcher beispielsweise mit einer Bürette verbunden ist. Das Zufuhrrohr 611 kann über eine Welle 617 linear in Richtung der Schwerkraft beziehungsweise entgegen der Richtung der Schwerkraft verschoben werden, so dass die Austragungsöffnung 619 in die Einfüllöffnung eines Zielgefässes eingeführt werden kann.

Figur 8 zeigt eine dreidimensionale Darstellung einer einsetzbaren Einheit 710 in einer siebten Ausführung mit einem Rührwerk 711, welches über die Welle 717 oder über einen, im Gehäuse 714 angeordneten Motor 719 angetrieben werden kann. Sofern ein Motor 719 im Gehäuse 714 angeordnet ist, kann dieser wie bereits in Figur 6 beschrieben, über Kontaktstellen 715, 716 mit elektrischer Energie versorgt werden.

Selbstverständlich können auch andere Antriebe wie beispielsweise hydraulische oder pneumatische Antriebe verwendet werden, wobei anstelle der Kontaktstellen 715, 716 entsprechende Anschlüsse angeordnet werden können.

Figur 9 zeigt die schematische Darstellung einer Aufnahmevorrichtung 820 in Aufsicht, wobei nur ein Teil der Aufnahmevorrichtung 820 dargestellt ist, und eine einsetzbare Einheit 810, welche in die Aufnahmevorrichtung 820 eingesetzt ist. Wie die Figur 9 zeigt, unterscheidet sich der obere Vorsprung 822" des oberen Trägers 821 " in seiner Ausgestaltung vom unteren Vorsprung 822"" des unteren Trägers 821 "". Während der untere Vorsprung 822"" lediglich der Aufnahme von an der einsetzbaren Einheit 810 angreifenden Kipp- und Drehmomenten dient, was einer Positionierung der einsetzbaren Einheit 810 in der Ebene orthogonal zur Schwerkraft entspricht, bildet der obere Vorsprung 822" gleichzeitig die Auflagestelle 823. Am Gehäuse 814 der einsetzbaren Einheit 810 sind unterschiedlich ausgestaltete Ausnehmungen 812", 812"" ausgebildet. Die obere Ausnehmung 812" ist trapezförmig ausgebildet, wobei die Trapezflanken die Abstützstellen 811 bilden. Durch diese Ausgestaltung wird eine formschlüssige und statisch bestimmte, spielfreie Verbindung der einsetzbaren Einheit 810 mit der Aufnahmevorrichtung 820 erreicht.

Des Weiteren sind am Gehäuse 814 Einführungshilfsflächen 891, 892 und an den Trägern 821", 821"" Einführungsflanken 899 angeordnet, welche es dem Benutzer erleichtern, die einsetzbare Einheit 810 in die Aufnahmevorrichtung 820 einzusetzen.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Dementsprechend werden solche Kombinationen und Alternativen als Teil der Erfindung betrachtet.

### Bezugszeichenliste

- 100: Dosiervorrichtung
- 810, 710, 610, 510, 410, 310, 210, 110: einsetzbare Einheit
- 811, 111: Abstützstelle
- 812"", 812", 112: Ausnehmung
- 814,714,114: Gehäuse
- 513,512,115: Gegenfläche
- 116: Flanke
- 217, 117: Verschlusswelle
- 118: Halterung
- 619, 219, 119: Austragungsöffnung
- 820, 120: Aufnahmevorrichtung
- 821"", 821", 121"", 121"', 121 ", 121': Träger
- 822"", 822", 122: Vorsprung
- 823' 123: Auflagestelle
- 124: Führungsfläche
- 128: Zwischenstück
- 129: Verriegelungsvorrichtung
- 130: Haltevorrichtung
- 131: Fuss
- 133: Lasche
- 140: Entnahmegefäss
- 150: Antriebsvorrichtung
- 151: Antriebswelle
- 170: Beschickungsvorrichtung
- 171: Beschickungsarm
- 172: Beschickungsaufnahme
- 173: Verriegelungseinrichtung
- 180: Kraftmessvorrichtung
- 181: Lastaufnehmer
- 182: Zielgefäss
- 201: Behälter
- 311: Bohrung
- 340: Dosiereinheit
- 411: Messfühler
- 412: Kabelanschluss
- 717, 617, 517, 417: Welle
- 511: Heizelement
- 716, 715, 514, 515: Kontaktstelle
- 611: Zufuhrrohr
- 612: Schlauchanschluss
- 711: Rührwerk
- 719: Motor
- 891, 892: Einführungshilfsfläche
- 899: Einführungsflanke

## Patentansprüche

1. Einsetzbare Einheit (110, 210, 310, 410, 510), die in eine Aufnahmevorrichtung (120) einer Dosiervorrichtung (100) einsetzbar beziehungsweise aus dieser Aufnahmevorrichtung (120) entfernbar ist, wobei sie eine Dosiereinheit für pulver- oder pastenförmiges Dosiergut, eine Titratoreinheit, eine Pumpeinheit, eine Einheit mit Rohrleitungen und Armaturen, eine Behältereinheit, eine Sensoreinheit , eine Heiz- und/oder Kühleinheit oder ein Adapter zur Aufnahme einer dieser Einheiten oder weiterer Einheiten ist, **dadurch gekennzeichnet, dass** die einsetzbare Einheit (110, 210, 310, 410, 510) mindestens zwei Gegenflächen (115, 512, 513) aufweist, wobei die Gegenflächen (115, 512, 513) bei in die Aufnahmevorrichtung (120) eingesetzter Einheit (110, 210, 310, 410, 510) mit den Führungsflächen (124) mindestens zweier Träger (121', 121 ", 121"', 121"") der Aufnahmevorrichtung (120) in Anlage sind und dass mindestens eine Gegenfläche (115, 512, 513) der einsetzbaren Einheit (110, 210, 310, 410, 510) und die im Betriebszustand mit dieser Gegenfläche (115, 512, 513) in Anlage stehende Führungsfläche (124) elektrisch leitende Kontakte (514, 515) zur Übertragung von Signalen und/oder elektrischer Energie aufweisen.

2. Einsetzbare Einheit (110, 210, 310, 410, 510) nach Anspruch 1, **dadurch gekennzeichnet, dass** an der einsetzbaren Einheit (110, 210, 310, 410, 510) mindestens eine Halterung (118) ausgebildet oder mit der einsetzbaren Einheit (110, 210, 310, 410, 510) mindestens eine Halterung (118) verbunden ist und eine Beschickungsvorrichtung (170) zur Beschickung einer Dosiervorrichtung (100) vorhanden ist, welche Beschickungsvorrichtung (170) mindestens eine in ihrer Ausgestaltung mit der Halterung (118) formschlüssig korrespondierende Beschickungsaufnahme (172) aufweist.

3. Einsetzbare Einheit (110, 210, 310, 410, 510) nach Anspruch 1 oder 2, **dadurch gekennzeichnet, dass** die einsetzbare Einheit mindestens eine Austragungsöffnung (119, 219) aufweist und welche Austragungsöffnung im Betriebszustand unterhalb der Träger (121', 121", 121"', 121"") angeordnet ist.

4. Dosiervorrichtung (100) mit einer Haltevorrichtung (130), **dadurch gekennzeichnet, dass** die Haltevorrichtung (130) mindestens eine Aufnahmevorrichtung (120) mit mehreren Trägern (121', 121", 121"', 121"") aufweist und jeder Träger mindestens eine Führungsfläche (124) aufweist, mindestens eine Führungsfläche (124) elektrisch leitende Kontakte (514, 515) zur Übertragung von Signalen und/oder elektrischer Energie aufweist und in welche Aufnahmevorrichtung (120) mindestens eine einsetzbare Einheit (110, 210, 310, 410, 510) nach einem der Ansprüche 1 bis 3 einsetzbar beziehungsweise aus dieser Aufnahmevorrichtung (120) entfernbar ist.

5. Dosiervorrichtung (100) nach Anspruch 4, **dadurch gekennzeichnet, dass** eine dem Einsetzen einer einsetzbaren Einheit (110, 210, 310, 410, 510) in die Aufnahmevorrichtung (120) beziehungsweise dem Entfernen einer einsetzbaren Einheit (110, 210, 310, 410, 510) aus der Aufnahmevorrichtung (120) dienende Beschickungsvorrichtung (170) vorhanden ist, welche mindestens eine in ihrer Ausgestaltung mit einer Halterung (118) der einsetzbaren Einheit (110, 210, 310, 410, 510) formschlüssig korrespondierende Beschickungsaufnahme (172) aufweist.

6. Dosiervorrichtung nach Anspruch 5, **dadurch gekennzeichnet, dass** die Beschickungsaufnahme (172) eine, der form- oder kraftschlüssigen Verbindung der Beschickungsvorrichtung (170) mit der Halterung (118) dienende Verriegelungseinrichtung (173) aufweist, wobei durch die Verriegelungseinrichtung (173) während eines Beschickungsvorganges beziehungsweise während eines Entfernungsvorganges die mindestens eine Einheit (110, 210, 310, 410, 510) in der Beschickungsaufnahme (172) arretierbar ist.
